# EUROPÄISCHE PATENTSCHRIFT

(11) **EP 1 508 962 B1**
(45) Veröffentlichungstag und Bekanntmachung des Hinweises auf die Patenterteilung: **06.10.2010**
(21) Anmeldenummer: 04018883.1
(22) Anmeldetag: 09.08.2004
(51) Int. Cl.: H02M 5/02

(54) **Spannungszwischenkreis-Umrichter**
Converter with intermediate voltage link
Convertisseur avec liaison intermédiaire en tension

(30) Priorität: 21.08.2003 DE 10338476
(43) Veröffentlichungstag der Anmeldung: 23.02.2005
(73) Patentinhaber: SIEMENS AKTIENGESELLSCHAFT, 80333 München (DE)
(72) Erfinder: Franke, Ralf-Michael, 81541 München (DE); Imrich, Franz, 91058 Erlangen (DE)

(56) Entgegenhaltungen:
- EP-A- 0 855 790
- DE-A1- 10 001 497
- US-A- 4 801 887
- US-A1- 2003 133 314

## Beschreibung

Die Erfindung bezieht sich auf einen Spannungszwischenkreis-Umrichter mit einem netzseitigen Diodengleichrichter, einem einen Folienkondensator als Zwischenkreis-Kondensator aufweisenden schlanken Zwischenkreis und einer Stromversorgung für eine Elektronik eines lastseitigen Stromrichters dieses Umrichters.

Ein handelsüblicher Spannungszwischenkreis-Umrichter, auch als Frequenzumrichter bezeichnet, weist netzseitig und lastseitig jeweils einen Stromrichter auf, die gleichspannungsseitig mittels eines Spannungszwischenkreises miteinander elektrisch leitend verbunden sind. Als netzseitiger Stromrichter wird ein netzgeführter Stromrichter, beispielsweise ein Diodengleichrichter, und als lastseitiger Stromrichter ein selbstgeführter Stromrichter, beispielsweise ein Pulswechselrichter, verwendet. Der Spannungszwischenkreis wird von einem oder mehreren Elektrolytkondensatoren gebildet. Außerdem weist ein Frequenzumrichter eine Stromversorgungseinrichtung für die Elektronik des Pulswechselrichters auf, der beispielsweise mittels eines Spannungswandlers elektrisch parallel zum Zwischenkreis-Kondensator geschaltet ist. Dadurch kann bei Netzunterbrechungen die Stromversorgung der Elektronik des Pulswechselrichters für eine vorbestimmte Zeit aufrechterhalten werden. Zum Nachladen des Zwischenkreis-Kondensators wird die kinetische Energie des stromrichtergespeisten Motors verwendet. Ist diese kinetische Energie aufgebraucht, entlädt sich der Zwischenkreis-Kondensator.

Kehrt das Netz erst dann wieder, wenn der Zwischenkreis-Kondensator wesentlich entladen ist, fließt ein hoher Strom im Netzeingang dieses Umrichters. Die Höhe dieses Ladestromes hängt einerseits von der Netzimpedanz des speisenden Netzes und andererseits von der Kapazität des Zwischenkreis-Kondensators des Frequenzumrichters ab. Die Dioden des netzseitigen Stromrichters können durch den hohen Ladestrom zerstört werden. Um dies zu verhindern, werden Dioden mit einem hohen I²T-Wert verwendet. Aus dem Gesichtspunkt der für einen Antrieb benötigten Leistung ist ein derartiger Diodengleichrichter überdimensioniert.

Weitere Möglichkeiten, um den Ladestrom niedrig zu halten, sind in der Veröffentlichung "Netzrückwirkungen bei Frequenzumrichtern", von Karl Simon, abgedruckt in der DE-Zeitschrift "etz", Heft 10, Seiten 32 und 33, 2003, zu entnehmen. In dieser Veröffentlichung werden Maßnahmen beschrieben, mit denen Netzrückwirkungen bei Frequenzumrichtern begrenzt werden können. Netzrückwirkungen bei Frequenzumrichtern entstehen vorwiegend durch den Zwischenkreis-Kondensator, hervorgerufen durch die Strom-Nachladung in der Spannungsspitze einer Halbschwingung.

Das übliche Verfahren, um diese Netzrückwirkungen zu reduzieren, ist der zusätzliche Einbau von Drosseln - entweder im Zwischenkreis oder am Eingang des Frequenzumrichters. D.h., die Drossel wird als strombegrenzendes Mittel, so dass der Nachladestrom begrenzt wird. Nachteil dieser Lösung ist, dass die Drossel zusätzlich Geld kostet und einen nicht zu vernachlässigenden Platz beansprucht.

Um diesen Nachteil zu kompensieren, werden gemäß dieser Veröffentlichung Frequenzumrichter mit einem sogenannten schlanken Zwischenkreis verwendet. Bei einem solchen Frequenzumrichter ist die Kapazität des Zwischenkreis-Kondensators erheblich erniedrigt worden. Wegen des geringen Kapazitätswertes des Zwischenkreis-Kondensators wird anstelle von Elektrolyt-Kondensatoren nun Folien-Kondensatoren verwendet. Dies hat zur Folge, dass die Zwischenkreisspannung eine hohe Welligkeit aufweist und der Mittelwert dieser Zwischenkreisspannung sinkt. Damit die Welligkeit der Zwischenkreisspannung nicht auf die Qualität einer Drehzahlregelung eines umrichtergespeisten Rotors wirkt, wird ein modifiziertes Steuerverfahren für einen Pulsweitenmodulator verwendet, der diese Welligkeit berücksichtigt. Nachteil dieser Lösung besteht darin, dass der Motor im Nennbetrieb bis zu 10% höheren Strom als Motorstrom aufnimmt, was zu einer höheren Motortemperatur führt. Wegen dieser Nachteile wird ein Frequenzumrichter mit schlankem Zwischenkreis hauptsächlich bei Pumpen- und Lüfteranwendungen verwendet.

Wegen der verminderten Kapazität des Zwischenkreis-Kondensators wird die Stromversorgungseinrichtung der Elektronik des Pulswechselrichters des Frequenzumrichters mit schlankem Zwischenkreis an eine Phase des speisenden Netzes angeschlossen. Dies hat jedoch zur Folge, dass bei Netzunterbrechungen die Stromversorgungseinrichtung ebenfalls ausfällt, so dass der Betrieb des Frequenzumrichters nicht aufrechterhalten werden kann. Soll ein derartiger Frequenzumrichter mit schlankem Zwischenkreis auch bei Netzunterbrechung in Betrieb bleiben, so muss die Stromversorgungseinrichtung gepuffert werden. Dadurch muss eine Sonderbauform der Stromversorgungseinrichtunng verwendet werden, die ebenfalls zusätzlich Geld kostet.

In Ländern mit instabilen Netzen treten Netzunterbrechungen häufiger auf. Gerade in solchen Ländern wird aber eine erhöhte Betriebszuverlässigkeit gefordert. Um dieser Forderung gerecht werden zu können, müssen die an solchen Netzen angeschlossenen Frequenzumrichter mit einer Drossel versehen sein. Da die Netzverhältnisse aber vorab in den meisten Fällen nicht bekannt sind, ist die Bestimmung einer Drossel nur mit viel Aufwand möglich. Ausfälle des Frquenzumrichters sind somit nicht auszuschließen.

Wird in einem instabilen Netz ein Frequenzumrichter mit schlanken Zwischenkreis angeschlossen, so können Ausfälle des Frequenzumrichters trotz gepufferter Stromversorgungseinrichtung und der Verwendung eines Verfahrens zur kinetischen Pufferung nicht verhindert werden.

Der Erfindung liegt nun die Aufgabe zugrunde, einen bekannten Spannungszwischenkreis-Umrichter mit schlankem Zwischenkreis derart weiterzubilden, dass dieser ohne Mehraufwand an seinen Netzeingang eine erhöhte Betriebszuverlässigkeit auch in instabilen Netzen aufweist.

Diese Aufgabe wird erfindungsgemäß mit den kennzeichnenden Merkmalen des Anspruchs 1 gelöst.

Dadurch, dass die Stromversorgungseinrichtung eingangsseitig mit einem Pufferkondensator versehen ist, dem eine Entkopplungsdiode mit nachgeschaltetem Begrenzungsmittel elektrisch in Reihe vorgeschaltet ist, wobei diese Reihenschaltung elektrisch parallel zum Folienkondensator des schlanken Zwischenkreises geschaltet ist, wird die Betriebssicherheit wesentlich erhöht, wobei am Netzeingang kein Mehraufwand betrieben werden muss. Mit dieser erfindungsgemäßen Topologie eines Spannungszwischenkreis-Umrichters ist die Stromversorgungseinrichtung vom schlanken Zwischenkreis des Zwischenkreis-Umrichters entkoppelt, so dass in Abhängigkeit der Dimensionierung des Pufferkondensators die Stromversorgung der Elektronik des Pulswechselrichters aufrechterhalten werden kann. Bei Wiederkehr des speisenden Netzes fließt wegen des geringen Kapazitätswertes des Zwischenkreis-Kondensators nur ein kleiner Nachladestrom, der die Dioden des netzseitigen Gleichrichters hinsichtlich I²T nicht belastet, dadurch muss der Diodengleichricher des Zwischenkreis-Umrichters nicht mehr überdimensioniert werden.

Somit erhält man einen Spannungszwischenkreis-Umrichter mit schlankem Zwischenkreis, der ohne Mehraufwand an seinem Netzeingang selbst in instabilen Netzen eine erhöhte Betriebssicherheit aufweist.

Vorteilhafte Ausgestaltungen des erfindungsgemäßen Spannungszwischenkreis-Umrichters sind den Unteransprüchen 2 bis 4 zu entnehmen.

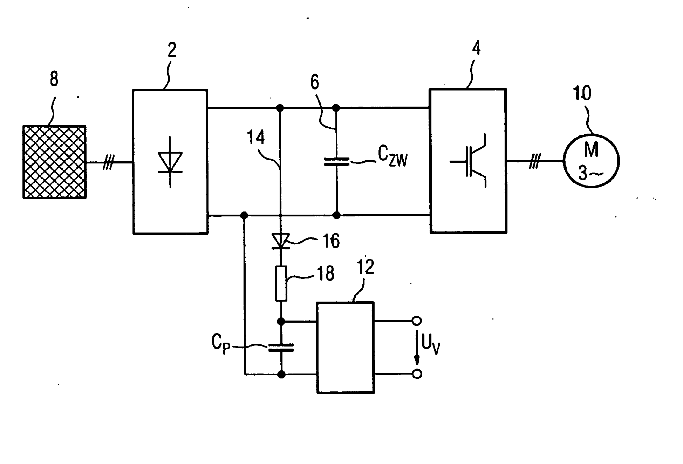

Im folgenden wird die Erfindung anhand eines Beispiels und mit Bezug auf die beiliegende Zeichnung näher erläutert, wobei in der Figur ein Blockschaltbild eines erfindungsgemäßen Spannungszwischenkreis-Umrichters veranschaulicht ist.

Gemäß dieser Figur weist der erfindungsgemäße Spannungszwischenkreis-Umrichter einen netzseitigen und einen lastseitigen Stromrichter 2 und 4 auf, die gleichspannungsseitig mittels eines schlanken Zwischenkreises 6 miteinander elektrisch leitend verbunden sind. Als netzseitiger Stromrichter 2 ist ein Diodengleichrichter vorgesehen, wogegen der lastseitige Stromrichter 4 ein Pulswechselrichter ist. Der schlanke Zwischenkreis 6 weist einen Folienkondensator als Zwischenkreis-Kondensator C_{ZW} auf. An den Netzeingängen des Umrichters ist ein speisendes Netz 8 angeschlossen. An den Ausgangs-Anschlüssen des Umrichters ist ein Drehstrommotor 10 angeschlossen.

Eine Stromversorgungseinrichtung 12 für die Elektronik des Pulswechselrichters weist eingangsseitig einen Pufferkondensator C_{P} auf. Der Pufferkondensator C_{P} ist elektrisch parallel zum Zwischenkreis-Kondensator C_{ZW} geschaltet, wobei in einer Zuleitung 14 des Pufferkondensators C_{P} eine Reihenschaltung aus Entkopplungsdiode 16 und Strombegrenzungsmittel 18 geschaltet ist. Durch diese Entkopplungsdiode 16 sind die beiden Kondensatoren C_{ZW} und Z_{P} voneinander entkoppelt. Mittels des Strombegrenzungsmittels 18 kann der Nachladestrom für den Pufferkondensator C_{P} auf einen vorbestimmten Wert eingestellt werden. Im einfachsten Fall ist dieses Strombegrenzungsmittel 18 ein ohmscher Widerstand, wodurch beim fließen eines Nachladestromes in den Pufferkondensator C_{P} an diesem eine Verlustleistung anfällt. Soll das Strombegrenzungsmittel 18 den Nachladestrom auf einen maximal zulässigen Wert begrenzen, ist es vorteilhaft, einen Heißleiter als Strombegrenzungsmittel 18 zu verwenden. Dadurch fällt nur dann eine Verlustleistung am Begrenzungsmittel 18 an, wenn dieser Heißleiter seinen Widerstandswert erhöht hat. Bei der Dimensionierung des Pufferkondensators C_{P} kommt es darauf an, welche Netzausfallzeit überbrückt werden soll. Dabei ist außerdem zu berücksichtigen, in welchen zeitlichen Abständen solche Netzunterbrechungen im speisenden Netz 8 auftreten bzw. auftreten können.

Tritt im speisenden Netz 8 eine Netzunterbrechung auf, so wird der Zwischenkreis-Kondensator C_{ZW} und der Pufferkondensator C_{P} nicht mehr mit Energie versorgt. Da der Pufferkondensator C_{P} vom Zwischenkreis-Kondesator C_{ZW} entkoppelt ist, kann dieser nicht von der Umrichterlast entladen werden. Somit kann die gespeicherte Energie des Pufferkondensators C_{P} allein zur Aufrechterhaltung der Stromversorgung der Elektronik des Pulswechselrichters verwendet werden. Dadurch bleibt der Spannungszwischenkreis-Umrichter in Betrieb, so dass dieser bei Netzwiederkehr wieder auf seinen Nennbetriebspunkt hochgefahren werden kann. Da der Zwischenkreis-Kondensator C_{ZW} einen geringen Kapazitätswert aufweist, ist die Höhe des Nachladestromes derart minimal, dass die Dioden im netzseitigen Diodengleichrichter hinsichtlich des I²T-Wertes nicht mehr überdimensioniert werden müssen.

Durch diese erfindungsgemäße Topologie eines Spannungszwischenkreis-Umrichters weist dieser Umrichter eine hohe Betriebszuverlässigkeit auf, die insbesondere in Ländern mit instabilen Netzen zum Tragen kommt. Diese hohe Betriebszuverlässigkeit ist ohne großen Aufwand am Netzeingang des Umrichters erreicht worden. Da die gepufferte Stromversorgungseinrichtung im Umrichtergerät integriert ist, kann der erfindungsgemäße Spannungszwischenkreis-Umrichter wie jeder handelsübliche Frequenzumrichter verschaltet werden.

## Patentansprüche

1. Spannungszwischenkreis-Umrichter mit einem netzseitigen Diodengleichrichter (2), einem einen Folienkondensator als Zwischenkreis-Kondensator (C_{ZW}) aufweisenden schlanken Zwischenkreis (6) und einer Stromversorgungseinrichtung (12) für eine Elektronik eines lastseitigen Stromrichters (4) dieses Umrichters,
**dadurch gekennzeichnet, dass** die Stromversorgungseinrichtung (12) eingangsseitig einen Pufferkondensator (C_{P}) aufweist, dem eine Entkopplungsdiode (16) mit nachgeschaltetem Begrenzungsmittel (18) elektrisch vorgeschaltet ist, und dass diese Reihenschaltung elektrisch parallel zum Folienkondensator (C_{ZW}) des schlanken Zwischenkreises (6) geschaltet ist.

2. Spannungszwischenkreis-Umrichter nach Anspruch 1,
**dadurch gekennzeichnet, dass** der Kondensatorwert des Pufferkondensators (C_{P}) derart festgelegt ist, dass eine vorbestimmte Netzausfallzeitspanne überbrückbar ist.

3. Spannungszwischenkreis-Umrichter nach einem der vorgenannten Ansprüche,
**dadurch gekennzeichnet, dass** als Strombegrenzungsmittel (18) ein Widerstand vorgesehen ist.

4. Spannungszwischenkreis-Umrichter nach Anspruch 1 oder 2,
**dadurch gekennzeichnet, dass** als Strombegrenzungsmittel (18) ein Heißleiter vorgesehen ist.

## Claims

1. Voltage intermediate-circuit converter having a line-side diode rectifier (2), a slim intermediate circuit (6) having a film capacitor as an intermediate-circuit capacitor (C_{ZW}), and a power supply device (12) for electronics of a load-side power converter (4) of this converter,
**characterized in that** the power supply device (12) has a buffer capacitor (C_{P}) on the input side, a decoupling diode (16) with downstream limiting means (18) being electrically connected upstream of said buffer capacitor, and **in that** this series circuit is electrically connected in parallel with the film capacitor (C_{ZW}) of the slim intermediate circuit (6).

2. Voltage intermediate-circuit converter according to Claim 1,
**characterized in that** the capacitor value of the buffer capacitor (C_{P}) is set in such a manner that a predetermined power failure period can be bridged.

3. Voltage intermediate-circuit converter according to one of the preceding claims,
**characterized in that** a resistor is provided as the current limiting means (18).

4. Voltage intermediate-circuit converter according to Claim 1 or 2,
**characterized in that** an NTC thermistor is provided as the current limiting means (18).

## Revendications

1. Convertisseur à circuit intermédiaire de tension, comprenant un redresseur à diode ( 2 ) du côté du secteur, un circuit ( 6 ) intermédiaire à fil ayant un condensateur à feuille comme condensateur ( C_{ZW} ) de circuit intermédiaire et un dispositif ( 12 ) d'alimentation en courant pour une électronique, un redresseur ( 4 ) du côté de la charge de ce convertisseur,
**caractérisé en ce que** le dispositif ( 12 ) d'alimentation a du côté de l'entrée un condensateur ( C_{P} ) tampon, en amont électriquement duquel est monté une diode ( 16 ) de découplage ayant des moyens ( 18 ) de limitation montés en aval et **en ce que** ce circuit série est monté électriquement en parallèle du condensateur ( C_{ZW} ) à feuille du circuit ( 6 ) intermédiaire à fil.

2. Convertisseur à circuit intermédiaire de tension suivant la revendication 1,
**caractérisé en ce que** la valeur de condensateur du condensateur ( C_{P} ) tampon est fixée de manière à pouvoir surmonter un laps de temps de défaillance du secteur déterminé à l'avance.

3. Convertisseur à circuit intermédiaire de tension suivant l'une des revendications précédentes,
**caractérisé en ce qu'**une résistance est prévue comme moyen ( 18 ) de limitation du courant.

4. Convertisseur à circuit intermédiaire de tension suivant la revendication 1 ou 2,
**caractérisé en ce qu'**une thermistance à coefficient de température négatif est prévu comme moyen ( 18 ) de limitation du courant.
